# EUROPÄISCHE PATENTSCHRIFT

(11) **EP 0 561 832 B1**
(45) Veröffentlichungstag und Bekanntmachung des Hinweises auf die Patenterteilung: **15.02.1995**
(21) Anmeldenummer: 91920705.0
(22) Anmeldetag: 29.11.1991
(51) Int. Cl.: C03B 5/43, C03B 5/44, F27D 1/06

(54) **SCHMELZWANNE FÜR GLAS-WANNENÖFEN MIT PALISADENSTEINEN UND BETRIEBSVERFAHREN HIERFÜR**
MELTING END FOR GLASS MELTING FURNACES WITH SOLDIER BLOCKS AND OPERATING PROCESS THEREFOR
CUVE DE FUSION POUR FOURS A CUVE DE VERRERIE AVEC BLOCS EN PALISSADE ET PROCEDE DE FONCTIONNEMENT CORRESPONDANT

(30) Priorität: 12.12.1990 DE 4039601
(43) Veröffentlichungstag der Anmeldung: 29.09.1993
(73) Patentinhaber: BETEILIGUNGEN SORG GMBH & CO. KG, D-97816 Lohr am Main (DE)
(72) Erfinder: KNAUER, Adolf, D-8770 Lohr am Main (DE)
(74) Vertreter: Zapfe, Hans, Dipl.-Ing.
(86) Internationale Anmeldenummer: EP9102260
(87) Internationale Veröffentlichungsnummer: WO9210434

(56) Entgegenhaltungen:
- DE-C- 288 778

## Beschreibung

Die Erfindung betrifft eine Schmelzwanne für Glas-Wannenöfen mit einem Wannenhohlraum für die Aufnahme einer Glasschmelze und mit aneinandergereihten Wannensteinen, die aus einem feuerfesten, mineralischen Werkstoff bestehen, den Wannenhohlraum umgeben, je eine dem Wannenhohlraum zugekehrte Innenseite, eine dem Wannenhohlraum abgekehrte Außenseite und mindestens in ihrem unteren Bereich einen rechteckigen Querschnitt aufweisen und über die vorgegebene Spiegellinie der Glasschmelze nach oben ragen, sowie mit Kühlluftdüsen, die auf die Außenseiten der Wannensteine gerichtet sind, wobei die Wannensteine auf ihrer Außenseite eine den Querschnitt in Tiefenrichtung vermindernde Ausnehmung aufweisen, in die bei fortschreitender Korrosion der Wannensteine feuerfeste Nachrüst-Elemente einsetzbar sind.

Durch die deutsche Patentschrift 288 778 ist es bei Schmelzwannen der vorstehenden Art bekannt, bei Glas-Wannenöfen in Ringlagenbauweise die oberste Ringlage mit Hohlräumen zu versehen, in die bei Betriebsbeginn Kühlluft eingeblasen wird und in die nach fortgeschrittener Korrosion eine feuerbeständige Platte eingelegt wird, die alsdann durch Kühlluft angeblasen wird. Es ist jedoch nicht ausgesagt, daß der Schmelzbetrieb auch dann noch fortgesetzt wird, wenn die eingelegte Feuerfest-Platte selbst der Schmelze ausgesetzt ist, und es ist auch nicht offenbart, daß sich dieses Spiel mehrfach wiederholen läßt, wenn beispielsweise auch die erste eingelegte Feuerfest-Platte von der Glasschmelze zerfressen ist.

Bei Glas-Wannenöfen in Ringlagenbauweise besteht das ganz erhebliche Problem, daß an den notwendigerweise vorhandenen Horizontalfugen zwischen den einzelnen Ringlagen eine verstärkte Korrosion durch sogenanntes "Blasenbohren" auftritt.

In absolutem Gegensatz zur Ringlagenbauweise nach der DE-A-288 778 steht die sogenannte Palisadenbauweise. Palisadensteine, bei deren Einsatz Horizontalfugen vermieden werden, sind beim Stand der Technik nicht offenbart. Die Erfindung befaßt sich hingegen mit der Verbesserung der Einsatzdauer (Ofenreise) und des Betriebsverhaltens von Schmelzwannen, bei denen die Wannensteine aus Palisadensteinen gebildet werden, d.h. keine Horizontalfugen aufweisen. Hierzu heißt es in dem noch im Jahre 1991 veröffentlichten Lexikon "ABC Glas", erschienen im "Deutscher Verlag für Grundstoffindustrie Leipzig", auf Seite 195, daß die Palisadensteine den Nachteil aufweisen, daß bei starkem Verschleiß an der Spülkante bzw. Schwappkante die gesamte Bordwand erneuert werden muß. Die Erfindung befaßt sich also erstmals mit dem Problem, bei Schmelzwannen für Glas-Wannenöfen die Ofenreise trotz der Verwendung von Palisadensteinen zu verlängern bzw. den frühzeitigen Austausch dieser Palisadensteine zu vermeiden. Weiterhin befaßt sich die Erfindung mit der stufenförmigen Ausbildung einer mindestens zweiteiligen Ausnehmung, so daß die hierzu komplementären Nachrüstelemente schrittweise und der Kontur des Korrosionsverlaufs folgend eingesetzt werden können.

Die besagten Palisadensteine haben üblicherweise die Form von Quadern, deren längste Achse senkrecht verläuft und die den Wannenhohlraum in einer endlosen Reihenanordnung lückenlos umgeben. Die Palisadensteine werden üblicherweise durch Gießen aus elektrisch geschmolzenen mineralischen Werkstoffen wie beispielsweise Quarzsand, kalzinierte Tonerde, Zirkonsilikat, Mischungen aus vorwiegend Al₂0₃, Zr0₂, Si0₂ (mit Spuren von Na₂0 und Fe) hergestellt. Die Temperatur der Glasschmelze liegt je nach Glasart zwischen etwa 1300 und 1600 °C. Die Palisadensteine sind aber nicht nur einer erheblichen Temperaturbelastung, sondern auch einer Korrosion ausgesetzt, die im Bereich der Schmelzbadoberfläche, der sogenannten Spiegellinie, am stärksten ist. Auch die Korrosion hängt wiederum von der Art des eingesetzten Glases ab.

Trotz einer Wandstärke von 250 bis 350 mm liegt die Lebensdauer derartiger Palisadensteine je nach der verwendeten Glasart und dem Ofendurchsatz zwischen etwa 4 und 10 Jahren. In dieser Zeitspanne wird das Material der Palisadensteine vornehmlich im Bereich der Spiegellinie bis auf einen geringen Rest von etwa 50 bis 100 mm abgetragen. Die sogenannte "Ofenreise" ist alsdann beendet, wenn nicht plattiert wird. Die Glasschmelze muß abgelassen und die Palisadensteine, deren Höhe je nach Ofengröße zwischen 800 und 2000 mm liegen kann, müssen ausgetauscht werden. Die Stillstandszeit ist wegen der erheblichen Kapitalbindung und der hohen Reparaturkosten, insbesondere aber durch den Produktionsausfall ein ganz erheblicher Kostenfaktor, so daß schon seit langem Versuche gemacht werden, die "Ofenreise" zu verlängern.

Das Material für die Palisadensteine ist ein relativ schlechter Wärmeleiter, was einerseits die Wärmeverluste durch die Ofenwand hindurch verringert, andererseits aber die Kühlung der durch die genannten hohen Temperaturen belasteten Innenseite der Palisadensteine erschwert. Üblicherweise werden die Palisadensteine im Bereich ihres oberen Endes mit Kühlluft angeblasen. Die Kühlwirkung ist jedoch wegen der an dieser Stelle vorhandenen Dicke bzw. Tiefe der Palisadensteine von etwa 250 bis 350 mm gering, da sich in dem Material wegen der besagten schlechten Wärmeleitfähigkeit ein steiler Temperaturgradient ausbildet. In der Regel verzichten daher die Betreiber derartiger Schmelzwannen in den ersten ein bis zwei Jahren auf die Einschaltung der Kühlluft, wodurch natürlich der Verschleiß bzw. die Korrosion beschleunigt wird. Erst dann, wenn bereits ein beträchtlicher Teil des Materials der Palisadensteine abgetragen worden ist, wird die Kühlluft eingeschaltet, so daß der Bremseffekt gegen die Korrosion erst zu einem späten Zeitpunkt eintritt. Die Forderungen nach einer wirksamen Kühlung einerseits und einer ausreichenden Wärmedämmung andererseits stehen sich gewissermaßen diametral entgegen.

Durch das Buch von Trier "Glasschmelzöfen Konstruktion und Betriebsverhalten", Springer-Verlag, 1984, Seiten 126 bis 128, ist ein Plattierverfahren der vorstehend genannten Art bekannt, bei dem auf die Außenseite der im Querschnitt unverminderten Palisadensteine ein schmelzgegossener Reparaturstein aufgesetzt wird, sobald die Auswaschung im Bereich des Schmelzenspiegels soweit fortgeschritten ist, daß an der Außenseite der Palisadensteine ein Temperaturgrenzwert überschritten wird. Diese bekannte Maßnahme nimmt jedoch keinen Einfluß auf die Geschwindigkeit der Erosion vor dem Plattieren.

Durch die DD-PS 240 538 ist es bekannt, ein Verbundsystem aus einer inneren Schicht und einer Zwischenschicht, die beide aus einem feuerfesten Material bestehen und gemeinsam die Funktion von Palisadensteinen haben, unterhalb des Schmelzenspiegels enden zu lassen und die Wannenbeckenwand im Bereich des Schmelzenspiegels aus aufgesetzten Steinen auszubilden, die eine sogenannte Randschicht bilden. Die betreffenden Steine sind im Querschnitt C-förmig ausgebildet und tragen Einsätze mit Kühlkanälen. Eine Reparatur der Randschicht ist nicht vorgesehen, und es wird zur Verlängerung der Dauer der Ofenreise vorgeschlagen, die Randschicht aus einem relativ dicken, hoch korrosionsbeständigen Feuerfestmaterial auszubilden. Nach dem Verschleiß der Randschicht muß diese als Ganzes ausgetauscht werden.

Durch die DE-OS 37 05 062 ist es gleichfalls bekannt, auf die Palisadensteine oberhalb des Schmelzenspiegels Formsteine aufzusetzen, die sowohl auf der Innen- als auch auf der Außenseite mit Ausnehmungen versehen sind. Ziel dieser Lösung ist jedoch die Verminderung des Gewichts der aufgesetzten Steine bei gleichzeitiger Verbesserung des thermischen Wirkungsgrades des Ofens. Eine Verlängerung der Standzeit der Palisadensteine bzw. der Dauer einer Ofenreise ist auf diese Weise nicht möglich, zumal die Formsteine nicht mit der Glasschmelze in Berührung stehen.

Der Erfindung liegt daher die Aufgabe zugrunde, eine Schmelzwanne der eingangs beschriebenen Art anzugeben, die zu einer längeren Ofenreise und damit zu einem wirtschaftlicheren Ofenbetrieb führt.

Die Lösung der gestellten Aufgabe erfolgt bei der eingangs angegebenen Schmelzwanne erfindungsgemäß dadurch, daß die Ausnehmung am oberen Ende von Palisadensteinen angeordnet und stufenförmig mit mindestens zwei Stufen ausgebildet ist, durch die der Querschnitt der Palisadensteine von unten nach oben sprunghaft verringert ist, daß für jede Stufe zum zugehörigen Ausnehmungsteil komplementäre Nachrüst-Elemente vorhanden sind, die nacheinander in denjeweiligen Ausnehmungsteil einsetzbar sind, und daß die Nachrüst-Elemente aus einem zu den Palisadensteinen kompatiblen, gegenüber Glas weitgehend resistenten Werkstoff besteht.

Durch die erfindungsgemäße Maßnahme wird die Wandstärke der Palisadensteine in Tiefenrichtung, d.h. in Richtung des Wärmestroms, deutlich verringert, so daß die Kühlluft bereits zu Beginn der Ofenreise auf die stufenförmig abgesetzte Außenseite der Palisadensteine gerichtet werden kann, wodurch das Fortschreiten der Korrosion von Anfang an gebremst wird. Man muß also nicht erst abwarten, bis ein wesentlicher Teil des Materials der Palisadensteine korrodiert ist, bevor man mit dem Zuschalten der immerhin recht energieaufwendigen Kühlung beginnen kann. Andererseits wird durch die Ausnehmung auf der Außenseite die Voraussetzung dafür geschaffen, daß mit fortschreitender Korrosion die Ausnehmung schrittweise mit Nachrüst-Elementen ausfüllt wird, so daß auf diese Weise zu einem oder mehreren späteren Zeitpunkten die ursprüngliche Wandstärke - oder sogar eine noch größere Wandstärke - hergestellt werden kann, ohne daß hierdurch jedoch die Kühlung beeinträchtigt wird.

Der Werkstoff für die Nachrüst-Elemente kann dabei der gleiche sein, wie er gemäß den einleitenden Ausführungen für die Palisadensteine verwendet wird.

Erfindungsgemäß werden also nicht die Palisadensteine auf der Korrosionsseite "geflickt", was eine vollständige oder teilweise Stillsetzung des Ofens und somit einen Produktionstyp und ein Ablassen der Glasschmelze bedingen würde, sondern es wird systematisch Material portionsweise auf der Außenseite der Palisadensteine ergänzt, was während des Ofenbetriebes oder in kurzen Intervallen erfolgen kann, in denen lediglich die Heizleistung verringert wird und die Kühlung zeitlich begrenzt abgestellt wird, um die Nachrüstung mit den Nachrüst-Elementen zu ermöglichen.

Durch die erfindungsgemäße Lösung wird die Ofenreise um etwa 2 bis 4 Jahre verlängert, was zu einer erheblichen Kostensenkung des Ofenbetriebes führt.

Das Ausfüllen der Ausnehmung erfolgt dabei vorzugsweise durch jeweils einen, zu dem jeweiligen Ausnehmungsteil komplementären Nachrüst-Formkörper, der die Form einer entsprechend dem jeweiligen Ansnehmungsteil dimensionierten Platte hat.

Der Zahl der Ausnehmungensteile ist natürlich nach oben hin keine Grenze gesetzt.

Auch die Form der Ausnehmung kann dabei unterschiedlich gewählt werden. Bevorzugt ist die Ausnehmung von Seitenwänden begrenzt, deren Außenflächen mit den Außenflächen im Bereich des unteren Querschnitts des Palisadensteins fluchten. Die Ausnehmung hat dabei die Form von nach oben offenen Taschen, die zwischen den besagten Seitenwänden in die Tiefe des Palisadensteins hineinführen. In diese Taschen können dann von der Außenseite her nacheinander mehrere Nachrüst-Elemente eingesetzt werden. Die waagrechten Querschnitte dieser - konkaven - "Taschen" können dabei oval, halb-elliptisch, halbrund, rechteckig oder mit Rippen versehen sein.

Die besagten Seitenwände werden dabei während der entscheidenden Betriebsphase gleichfalls von der Kühlluft beaufschlagt und dadurch zusätzlich gekühlt, so daß sie die Wirkung von "Kühlrippen" haben. Dabei hat der auf der Außenseite gemeinsam gebildete Hohlraum gewissermaßen die Form einer zwischen zwei Seitenwänden verlaufenden Treppe, wobei die Nachrüst-Elemente nacheinander von innen nach außen auf die einzelnen Treppenstufen gestellt werden, wobei sie bis an die beiden Seitenwände heranreichen.

Es ist aber auch möglich, die Ausnehmung über die gesamte Breite des Palisadensteins durchgehend auszubilden, so daß das obere Ende eines jeden Palisadensteins die Form einer freistehenden Treppe hat.

Diese Formgebung hat folgende Vorteile: erhöhte Stabilität, leichte Gießbarkeit des Steines bei der Herstellung, Lastaufnahme durch Verankerung, Kontrollierbarkeit der Fuge gegen Glasaustritt.

Die erfindungsgemäße Form des Palisadensteins kann dabei auf unterschiedliche Weise erzeugt werden: Es ist möglich, den Palisadenstein mit der mindestens einen Ausnehmung in einer entsprechenden Gießform zu gießen; es ist aber auch möglich, die Ausnehmung durch einen mechanischen Bearbeitungsvorgang zu erzeugen.

Üblicherweise befindet sich auf der Außenseite der Palisadensteine noch eine sogenannte Bassin-Isolierung, die aus einer ersten Lage aus Schamotte und einer zweiten Lage aus einem anderen, leichteren Isoliermaterial besteht. Die Bassin-Isolierung reicht in der Regel bis zu einer Höhe, die unterhalb des sogenannten Nasensteins gerade noch genügend Platz freiläßt für die Anbringung der Kühlluftdüsen.

Die Wärmedämmplatten der Bassin-Isolierung können nun besonders vorteilhafter Weise als Tragelemente für weitere Nachrüst-Elemente verwendet werden, dann nämlich, wenn man die oberen Enden der Bassin-Isolierung in eine tieferliegende waagrechte Ebene versetzt und das dadurch gewonnene freie Volumen zunächst durch einzelne obere Wärmedämmplatten ausfüllt, die nacheinander schrittweise durch einzelne Nachrüst-Elemente ersetzt werden. Dadurch Kann die Korrosion bis zu einer Tiefe erfolgen, die über die Tiefe der Palisadensteine hinausgeht. Einzelheiten dieser Maßnahme sind Gegenstand der Ansprüche 9 bis 11 und werden in der Detailbeschreibung noch naher erläutert.

Die Erfindung betrifft auch ein Betriebsverfahren für eine derartige Schmelzwanne, bei der die Oberkanten der Nachrüst-Elemente im wesentlichen auf der gleichen Höhe liegen wie die Oberkanten der Palisadensteine und bei der eine Kühlluftbespülung im Bereich der Spiegellinie durchgeführt wird. Das Betriebsverfahren geht dabei von dem Oberbegriff des Anspruchs 14 aus.

Zur Lösung im wesentlichen der gleichen Aufgabe ist ein solches Betriebsverfahren dadurch gekennzeichnet, daß die Schmelzwanne in einer ersten von mehreren Betriebsphasen ohne ein Nachrüst-Element im ersten Ausnehmungsteil und mit Kühlluftbespülung des Grundes dieses Ausnehmungsteils betrieben wird, und daß in der mindestens einen nachfolgenden Betriebs-Phase jeweils ein weiteres Nachrüstelement in das erste und jedes weitere Ausnehmungsteil eingesetzt wird und daß jeweils die Außenseite des einzeln nachgesetzten Nachrüstelements mit Kühlluft angeblasen wird.

Ein besonderes vorteilhaftes Betriebsverfahren ist dadurch gekennzeichnet, daß
a) sich in der ersten Phase im zweiten Ausnehmungsteil und oberhalb der unteren Wärmedämmplatten je eine weitere Wärmedämmplatte befindet, deren Oberkante unterhalb der Kühlluftdüse liegt, und daß die Schmelzwanne
b) in der zweiten Phase mit dem ersten Nachrüst-Element im ersten Ausnehmungsteil und mit Kühlluftbespülung dieses Nachrüst-Elements betrieben wird, wobei sich im zweiten Ausnehmungsteil und oberhalb der unteren Wärmedämmplatten je eine weitere Wärmedämmplatte befindet, deren oberkante unterhalb der Kühlluftdüse liegt,
c) in einer dritten Phase mit einem zweiten Nachrüst-Element im Ausnehmungsteil und mit Kühlluftbespülung dieses Nachrüst-Elements betrieben wird, wobei sich oberhalb der unteren Wärmedämmplatten weitere Wärmedämmplatten befinden, deren Oberkanten unterhalb der Kühlluftdüse liegen,
d) in einer vierten Phase mit einem dritten Nachrüst-Element oberhalb der unteren Wärmedämmplatten und mit Külluftbespülung dieses Nachrüst-Elements betrieben wird, wobei sich oberhalb der unteren Wärmedämmplatten eine weitere Wärmedämmplatte befindet, deren Oberkante unterhalb der Kühlluftdüse, und daß die Schmelzwanne, und
e) in einer fünften Phase mit einem vierten Nachrüst-Element (48) oberhalb der unteren Wärmedämmplatten (11, 12) und mit Kühlluftbespülung dieses Nachrüst-Elements (48) betrieben wird.

In besonders vorteilhafter Weise kann dabei der Nachrüst-Zeitpunkt für den Einsatz eines jeden folgenden Nachrüst-Elements durch Erfassung der Temperatur der jeweils angeblasenen Oberfläche bestimmt werden. Dies kann visuell geschehen, indem man die jeweilige Außenwand des von der Glasschmelze beaufschlagten Bauteils beobachtet und die zu der betreffenden Glühfarbe gehörende Temperatur bestimmt.

Weitere vorteilhafte Ausgestaltungen des Erfindungsgegenstandes ergeben sich aus den übrigen Unteransprüchen.

Ein Ausführungsbeispiel des Erfindungsgegenstandes wird nachfolgend anhand der Figuren 1 bis 12 näher erläutert.

Es zeigen:
- Figur 1: einen Vertikalschnitt durch eine Seitenwand eines Glas-Schmelzofens nach dem Stande der Technik,
- Figur 2: einen analogen Vertikalschnitt durch eine Schmelzwanne nach der Erfindung zu Beginn der ersten Betriebsphase,
- Figur 3: einen Vertikalschnitt analog Figur 2 zu Beginn der zweiten Betriebsphase,
- Figur 4: einen Vertikalschnitt analog Figur 2 zu Beginn der dritten Betriebsphase,
- Figur 5: einen Vertikalschnitt analog Figur 2 zu Beginn der vierten Betriebsphase,
- Figur 6: einen Vertikalschnitt analog Figur 2 zu Beginn der fünften Betriebsphase,
- Figur 7: einen Schnitt durch den Gegenstand nach Figur 8 entlang der Linie VII-VII,
- Figur 8: einen Schnitt durch den Gegenstand nach Figur 7 entlang der Linie VIII-VIII,
- Figur 9: eine Draufsicht von oben auf einen Palisadenstein mit zwei quaderförmigen Ausnehmungsteilen gemäß den Figuren 7 und 8,
- Figur 10: eine Draufsicht auf einen Palisadenstein mit zwei im Grundriß trapezförmigen Ausnehmungsteilen,
- Figur 11: eine Draufsicht auf einen Palisadenstein mit über die gesamte Breite durchgehenden Ausnehmungsteilen und
- Figur 12: einen Ausschnitt aus einer Draufsicht auf eine erfindungsgemäße Wand aus Palisadensteinen.

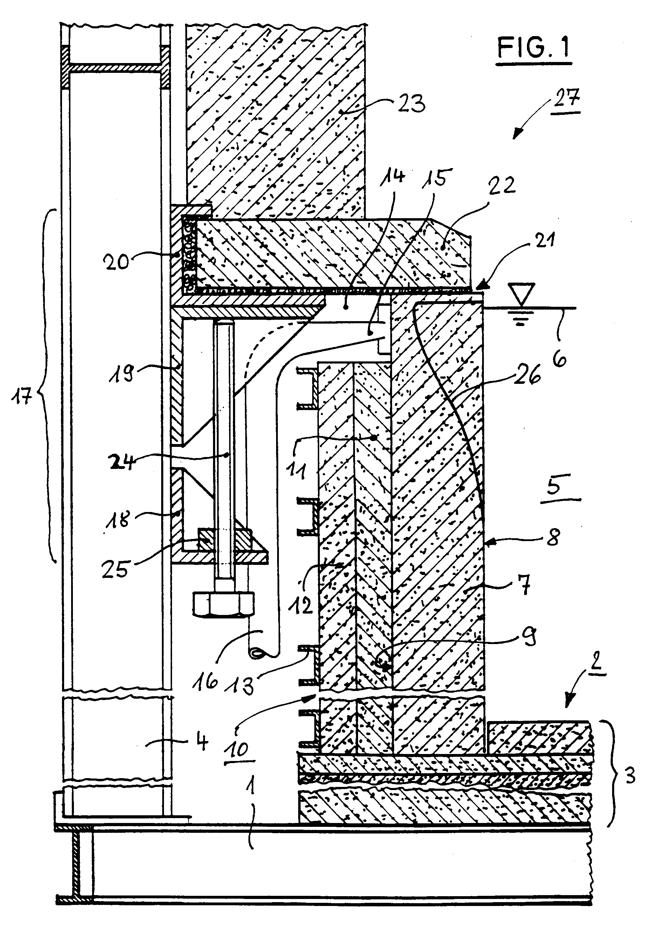

In Figur 1 ist eine aus Doppel-T-Trägern bestehende Plattform 1 für einen Wannenboden 2 dargestellt, der aus mehreren nicht im einzelnen bezeichneten Lagen 3 aus unterschiedlichen hitzebeständigen mineralischen Werkstoffen besteht. Auf der Plattform 1 ruht ein Ofengestell, das aus zahlreichen Säulen 4 mit einem doppel-T-förmigen Querschnitt besteht. An den Säulen 4 sind die nachstehend noch näher beschriebenen Bauteile befestigt.

Über dem Wannenboden 2 befindet sich ein im wesentlichen quaderförmiger Wannenhohlraum 5, der bis zu einer Spiegellinie 6 mit Glasschmelze gefüllt ist. Der Wannenhohlraum 5 ist von einer endlosen Reihe von Palisadensteinen 7 umgeben, die je eine dem Wannenhohlraum 5 zugekehrte Innenseite 8 und eine dem Wannenhohlraum abgekehrte Außenseite 9 aufweisen. Jeder Palisadenstein hat die Form eines schlanken Quaders, dessen längste Achse senkrecht steht.

An der Außenseite 9 liegt die Bassin-Isolierung 10 an, die aus ersten Wärmedämmplatten 11 und zweiten Wärmedämmplatten 12 besteht. Die gesamte Anordnung wird von U-förmigen Halteschienen 13 gehalten.

Die Bassin-Isolierung 10 hat eine gegenüber den Palisadensteinen 7 geringere Höhe, so daß im oberen Bereich ein spaltförmiger Raum 14 freigelassen wird, in dem sich zahlreiche Kühlluftdüsen 15 befinden, deren Austrittsöffnungen auf die freiliegende Außenseite 9 eines jeden Palisadensteins 7 gerichtet sind. Die Kühlluftdüsen 15 sind über je eine verstellbare Rohrleitung 16 an ein nicht gezeigtes Gebläse angeschlossen.

An einer jeden Säule 4 ist eine Tragkonstruktion 17 befestigt, die aus einer ortsfesten Konsole 18 und einem verstellbaren Auflager 19 besteht, das über nicht gezeigte Schrauben und entsprechende Langlöcher mit der Säule 4 verbunden ist. Das Auflager 19 ist wiederum fest mit einem über mehrere Säulen 4 durchgehenden Halteprofil 20 verbunden, in dem unter Zwischenschaltung einer hitzebeständigen Fasermatte 21 ein Nasenstein 22 gelagert ist. Auf diesem Nasenstein ruht die sogenannte Seitenaufmauerung 23, deren Details jedoch nicht dargestellt sind.

Durch Lösen der nicht gezeigten Verschraubung der Auflager 19 und Betätigen von Hubspindeln 24, von denen gleichfalls nur eine dargestellt ist, lassen sich sämtliche Auflager 19 und die darüber befindlichen Bauteile in der Höhe justieren, und zwar zum Zwecke eines Längenausgleichs der thermischen Ausdehnung der Palisadensteine 7. Eine jede Hubspindel 24 ist in einer entsprechenden Spindelmutter 25 gelagert.

In Figur 1 ist eine Korrosionslinie 26 eingezeichnet, bis zu der das Material der Palisadensteine ausgewaschen werden kann, womit die Ofenreise dann beendet ist und der Austausch der Palisadensteine erfolgen muß. Es ergibt sich aus der Betrachtung der Figur 1, daß zu Beginn der Ofenreise der Abstand zwischen der alsdann noch ebenen Innenseite 8 und der Kühlluftdüse 15 der gesamten Tiefe der Palisadensteine 7 entspricht, so daß die Kühlung zu Beginn weitgehend unwirksam ist.

Figur 1 und die nachfolgenden Figuren zeigen einen wesentlichen Ausschnitt aus einer Schmelzwanne 27. In den folgenden Figuren wird auf eine Wiederholung der bisherigen Bezifferung sehr weitgehend verzichtet, und die Beschreibung befaßt sich im wesentlichen mit den erfindungsgemäßen unterschieden zum Stande der Technik.

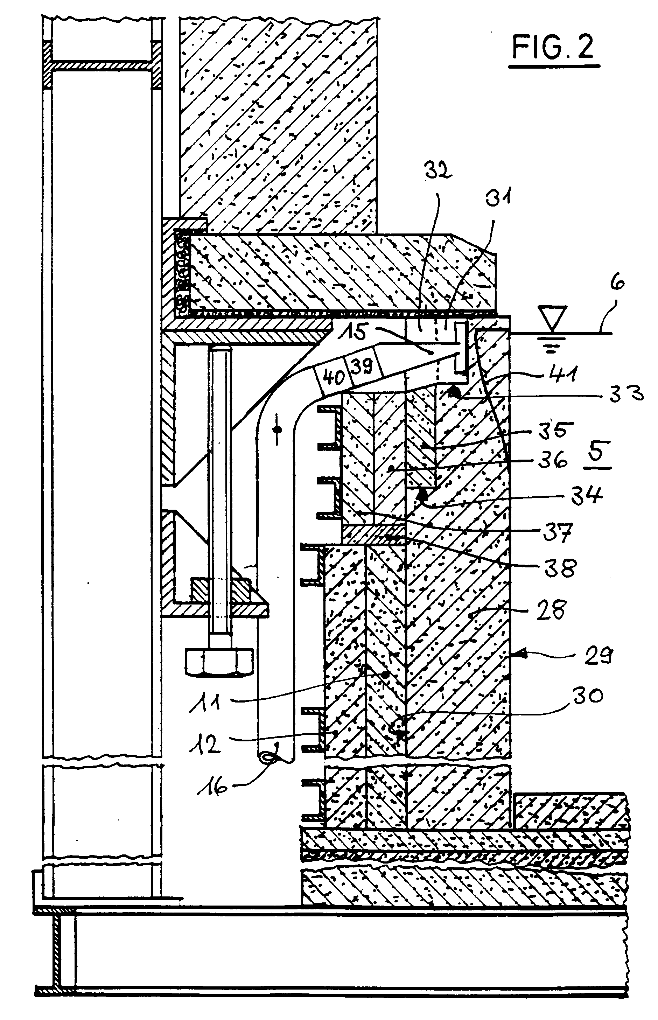

In Figur 2 ist ein unterschiedlich gestalteter Palisadenstein 28 mit einer Innenseite 29 und einer Außenseite 30 dargestellt. Die Palisadensteine 28 sind jedoch auf der Außenseite 30 im wesentlichen im Bereich der Spiegellinie 6 mit einer Ausnehmung versehen, die aus zwei den Querschnitt in Tiefenrichtung vermindernden Ausnehmungsteilen 31 und 32 besteht, die sich nach unten hin bis zu je einer Stufe 33 und 34 erstrecken. Im freigelassenen Teil bilden die Ausnehmungsteile 31 und 32 natürlich einen gemeinsamen Raum, in dem sich die Kühlluftdüse 15 befindet, die auf den Grund des Ausnehmungsteils 31 gerichtet ist. Es ist erkennbar, daß durch die Ausnehmungsteile 31 und 32 die Restwandstärke des Palisadensteins 28 im Bereich der Spiegellinie 6 deutlich verringert ist, beispielsweise bis auf eine Wandstärke von 100 mm, und daß dadurch die Wirksamkeit der Kühlluftanblasung deutlich erhöht wird. Es ist weiterhin zu sehen, daß der untere Teil des weniger tiefen Ausnehmungsteils 32 durch ein wärmedämmendes Füllstück 35 ausgefüllt ist, das beispielhaft aus Schamotte besteht. Die beiden unteren Wärmedämmplatten 11 und 12 sind in ihrer Höhe verkürzt und schaffen Platz für zwei obere Wärmedämmplatten 36 und 37, die sich über ein Distanzstück 38 auf den unteren Wärmedämmplatten 11 und 12 abstützen. Die Höhe der Wärmedämmplatten 36 und 37 endet knapp unterhalb der Kühlluftdüse 15 bzw. der Verbindungsstücke 39 und 40 zwischen der Kühlluftdüse 15 und der Rohrleitung 16.

In Figur 2 ist eine Korrosionslinie 41 dargestellt, bis zu der die Auswaschung durch die Glasschmelze in der ersten Betriebsphase zugelassen werden kann, bevor die erste Nachrüstung der Schmelzwanne beginnt.

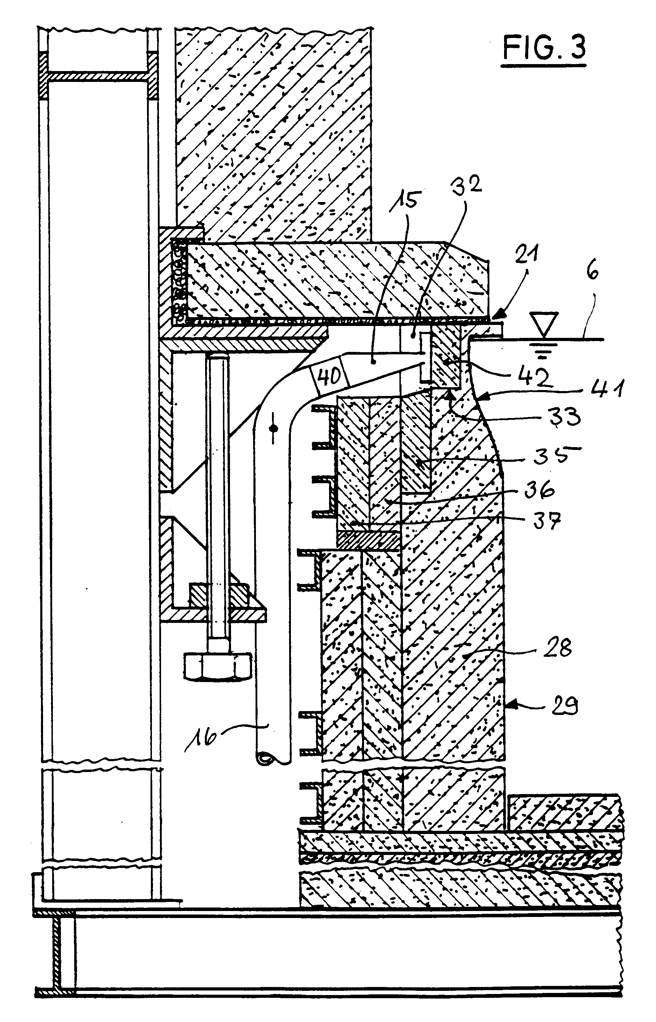

Figur 3 zeigt nun diesen Zustand nach der ersten Nachrüstung und den Beginn der zweiten Betriebsphase der Ofenreise. In den Ausnehmungsteil 31 ist ein erstes Nachrüst-Element 42 eingesetzt, das sich über die gesamte Breite des Ausnehmungsteils 31 und zwischen der Stufe 33 und der Fasermatte 21 erstreckt. Die Kühlluftdüse 15 wurde durch Ausbau des Verbindungsstücks 39 um ein entsprechendes Maß nach hinten versetzt, so daß sie nunmehr die Außenseite des Nachrüst-Elements 42 anbläst. Die Beschaffenheit des Füllstücks 35 und der Wärmedämmplatten 36 und 37 bleibt während dieser zweiten Phase unverändert.

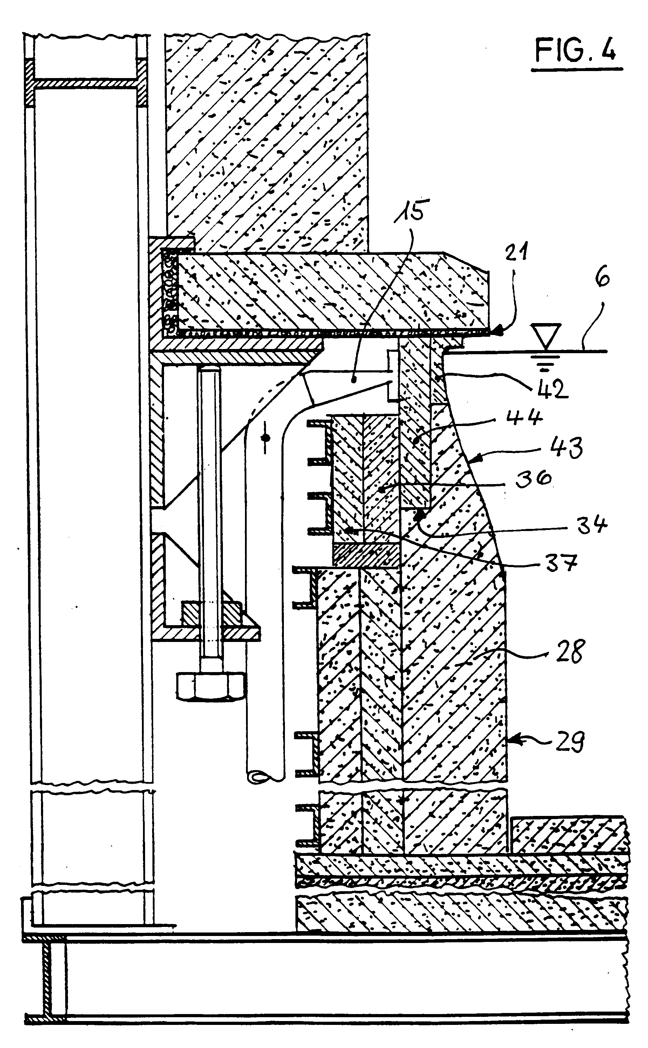

Die Korrosion kann nunmehr weiter fortschreiten, bis eine Korrosionslinie 43 erreicht ist, wie sie in Figur 4 dargestellt ist. Zu diesem Zeitpunkt ist auch bereits ein beträchtlicher Teil des ersten Nachrüst-Elements 42 ausgewaschen. Zu diesem Zeitpunkt Wird das aus Schamotte bestehende Füllstück 35 entfernt und durch ein zweites Nachrüst-Element 44 ersetzt, das den zweiten Ausnehmungsteil 32 ausfüllt und sich von der Stufe 34 bis zur Fasermatte 21 erstreckt. Die Kühlluftdüse 15 wurde durch Ausbau des nächstfolgenden Verbindungsstückes 40 um ein entsprechendes Maß zurückgesetzt und ist nunmehr auf die Außenseite des zweiten Nachrüst-Elements 44 gerichtet. Dieses zweite Nachrüst-Element 44 wird durch die wieder eingesetzten Wärmedämmplatten 36 und 37 gehalten.

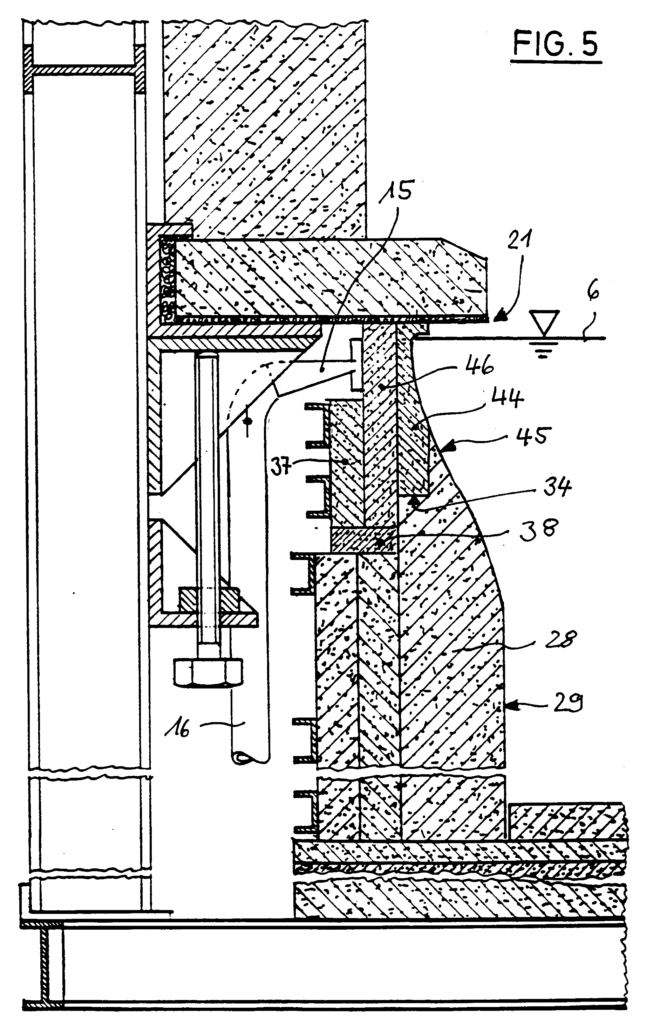

Ausgehend von diesem Montagezustand beginnt nunmehr die dritte Betriebsphase der Ofenreise, die mit einer Lage der Korrosionslinie 45 endet, wie sie in Figur 5 dargestellt ist. In diesem Zustand ist das zweite Nachrüst-Element 44 bereits zu einem merklichen Teil ausgewaschen.

Bei den nun folgenden Nachrüstarbeiten wird die innere, obere Wärmedämmplatte 36 durch ein drittes Nachrüst-Element 46 ersetzt, das allerdings eine größere Höhe hat als die ausgetauschte Wärmedämmplatte und sich vom Distanzstück 38 bis zur Fasermatte 21 erstreckt. Die Oberkante des Distanzstücks 38 liegt jedenfalls tiefer als die Stufe 34. Die obere Wärmedämmplatte 37 ist nach wie vor vorhanden und dient zur Abstützung des dritten Nachrüst-Elements 46. Die Kühlluftdüse 15 wurde erneut zurückgesetzt und bläst nun die Außenseite des dritten Nachrüst-Elements 46 in dessen oberem Bereich an.

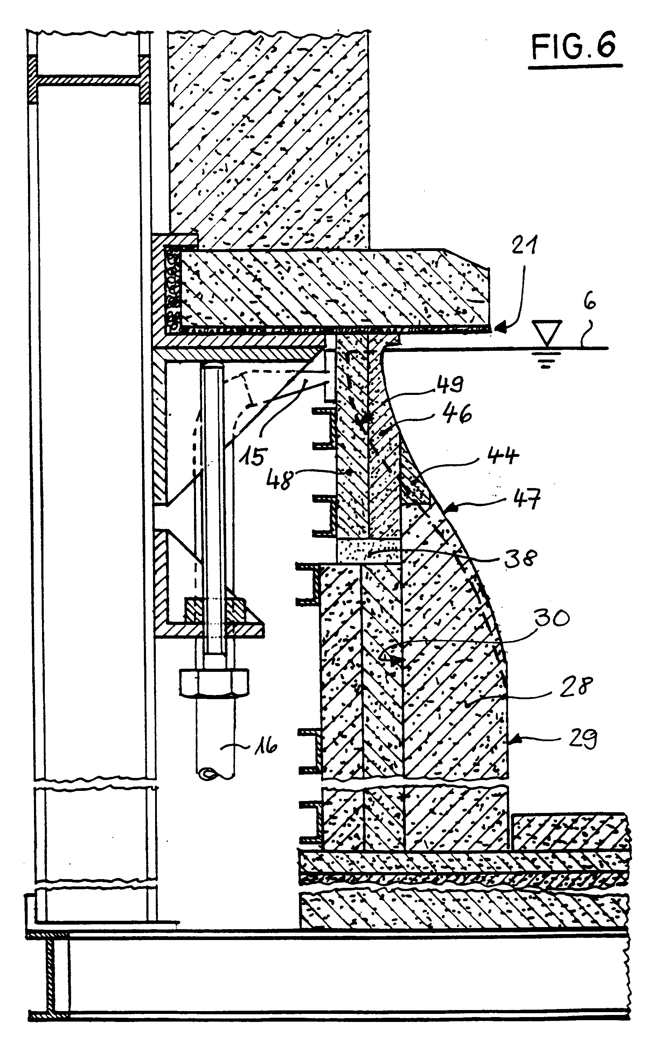

Die Ofenreise kann nunmehr - ausgehend von dem Montagezustand in Figur 5 - in ihre vierte Phase eintreten, deren Ende in Figur 6 dargestellt ist.

Die Lage der neuen Korrosionslinie 47 ist in Figur 6 dargestellt. Es ist zu erkennen, daß auch bereits das zweite Nachrüst-Element 44 bereits bis auf einen geringen Rest ausgewaschen wurde und daß auch bereits ein merklicher Teil des dritten Nachrüst-Elements 46 korrodiert worden ist. Es ist zu erkennen, daß in diesem Stadium der Ofenreise die Korrosionslinie 47 sich bereits in einen Bereich hinein erstreckt, der jenseits einer senkrechten Ebene liegt, in der sich die Außenseite 30 des Palisadensteins 29 befindet. Ein solcher Betriebizustand ist mit der klassischen Bauweise der Schmelzwannen schlechterdings nicht zu erreichen.

Zu diesem Zeitpunkt findet eine weitere Nachrüstung statt, und zwar wird die äußere Wärmedämmplatte 37 (Figur 5) durch ein viertes Nachrüst-Element 48 ersetzt, das sich von dem Distanzstück 38 bis zur Fasermatte 21 erstreckt, also die Außenseite des dritten Nachrüst-Elements 46 vollständig abstützt. Ausgehend von diesem - in Figur 6 dargestellten - Montagezustand findet nunmehr die fünfte Betriebsphase statt. Die Kühlluftdüse 15 ist nunmehr auf die Außenseite des vierten Nachrüst-Elements 48 gerichtet, d.h. sie wurde noch um ein weiteres, der Dicke des Nachrüst-Elements 48 entsprechendes Stück zurückgesetzt. Die Ofenreise kann nunmehr fortgesetzt werden, bis eine neue Korrosionslinie 49 erreicht ist, die in Figur 6 gestrichelt dargestellt ist. Die Ofenreise ist nunmehr beendet.

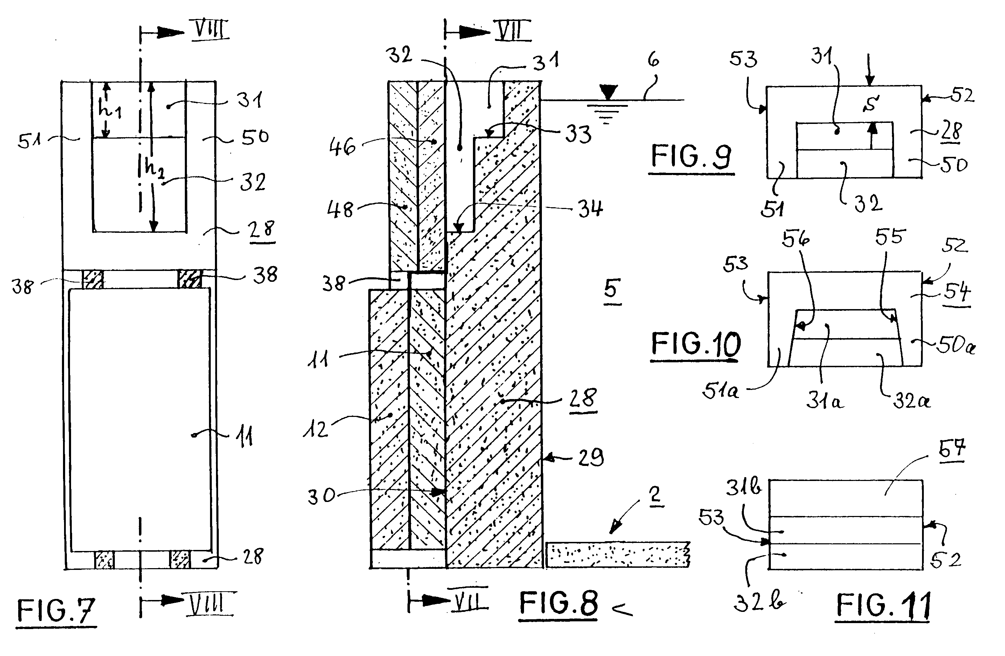

In den Figuren 7, 8 und 9 sind weitere Einzelheiten im Bereich eines Palisadensteins 28 dargestellt. Es ist zu erkennen daß die beiden ineinander übergehenden Ausnenmungsteile 31 und 32 jeweils einen quaderförmigen Hohlraum bilden und nach unten hin durch die Stufen 33 und 34 begrenzt sind. Auf beiden Seiten sind die Ausnehmungsteile von Seitenwänden 50 und 51 begrenzt, die zwischen planparallelen Ebenen liegen. Die Außenflächen 52 und 53 fluchten mit den Außenflächen im Bereich des unteren Querschnitts des Palisadensteins, so daß die Palisadensteine mit kleinstmöglichen Spalten in endloser Reihe nebeneinander aufgestellt werden können. Bei diesem Ausführungsbeispiel haben die beiden Ausnehmungsteile jeweils in einer waagrechten Ebene einen rechteckigen Querschnitt, was besonders Figur 9 zu entnehmen ist. In Korrosionsrichtung gesehen beträgt die Wandstärke S am obersten Ende des Palisadensteins 28 etwa 100 mm, und die Tiefe eines jeden Ausnehmungsteils 31 bzw. 32 beträgt - in gleicher Richtung gesehen - jeweils etwa 75 mm, so daß die gesamte Dicke des Palisadensteins etwa 250 mm beträgt. Während die Dicke der unteren Wärmedämmplatten 11 und 12 etwa 100 mm beträgt, ist die Dicke der an die Stelle der oberen Wärmedämmplatten getretenen Nachrüst-Elemente 46 und 48 auf je etwa 75 mm reduziert.

Die Höhe h₁ des ersten und tiefsten Ausnehmungsteils 31 beträgt etwa 150 mm, und die Höhe h₂ des zweiten und weniger tiefen Ausnehmungsteils 32 beträgt etwa 400 mm. Die Höhe der Nachrüst-Elemente 46 und 48 beträgt etwa 500 mm, so daß die Höhenstufung dem bogenförmigen Verlauf der maximal möglichen Korrosionslinie 49 (Figur 6) entspricht. Die Dicke der Seitenwände 50 und 51 liegt etwa zwischen 50 und 100 mm. Es versteht sich, daß für die Nachrüst-Elemente 42 und 44 entsprechende Dimensionierungsvorschriften gelten, so daß diese möglichst raumfüllend in die Ausnehmungsteile 31 und 32 eingesetzt werden können.

Figur 10 zeigt eine Variante eines Palisadenstein 54, die sich von dem Palisadenstein 28 nach Figur 9 lediglich dadurch unterscheidet, daß die Ausnebmungsteile 31a und 32a zu den Seitenwänden 50a und 51a hin durch schrägverlaufende Innenflächen 55 und 56 begrenzt sind, die den Ausnehmungsteilen in einer waagrechten Schnittebene einen trapezförmigen Querschnitt verleihen. Es versteht sich, daß die betreffenden - hier nicht dargestellten - ersten und zweiten Nachrüst-Elemente einen komplementären Querschnitt haben. Auch hier sind Seitenwände 50a und 51a vorhanden.

Figur 11 zeigt eine weitere Variante eines Palisadensteins 57, bei dem die Ausnehmungsteile 31b und 32b über die gesamte Breite des Palisadensteins 57 durchgehend ausgebildet sind. Im Querschnitt gesehen entspricht das Aussehen des Palisadensteins 57 sehr weitgehend dem Palisadenstein 28 in Figur 8, d.h. es sind auch hier Stufen entsprechend vergrößerter Breite vorhanden.

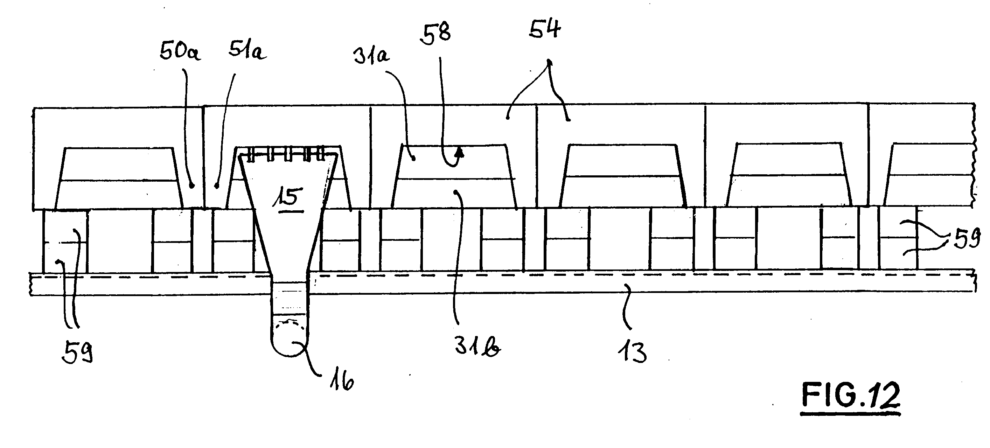

Figur 12 zeigt nun einen Ausschnitt aus einer "Palisadenwand" mit Palisadensteinen 54 nach Figur 10 in der ersten Betriebsphase der Ofenreise. In dieser Phase sind die Kühlluftdüsen 15, von denen nur eine einzige dargestellt ist, auf den zur Innenseite der Palisadensteine parallelen Grund 58 des ersten Ausnebmungsteils 31a ausgerichtet. Bei diesem Ausführungsbeispiel sind die oberen Wärmedämmplatten 36 und 37 nach Figur 2 durch reine Abstandshalter 59 ersetzt, was für die beiden ersten Betriebsphasen ohne weiteres möglich ist. Aus Figur 12 ist auch ersichtlich, daß die paarweise unmittelbar aneinanderstoßenden Seitenwände 50a und 51a zusätzlich als sogenannte Kühlrippen wirken, da sie auf ihrer Innenseite durch die Kühlluft gleichfalls angeblasen werden.

## Patentansprüche

1. Schmelzwanne (27) für Glas-Wannenöfen mit einem Wannenhohlraum (5) für die Aufnahme einer Glasschmelze und mit aneinandergereihten Wannensteinen, die aus einem feuerfesten, mineralischen Werkstoff bestehen, den Wannenhohlraum umgeben, je eine dem Wannenhohlraum zugekehrte Innenseite (29), eine dem Wannenhohlraum abgekehrte Außenseite (30) und mindestens in ihrem unteren Bereich einen rechteckigen Querschnitt aufweisen und über die vorgegebene Spiegellinie (6) der Glasschmelze nach oben ragen, sowie mit Kühlluftdüsen (15), die auf die Außenseiten der Wannensteine gerichtet sind, wobei die Wannensteine (28, 54, 57) auf ihrer Außenseite (30) eine den Querschnitt in Tiefenrichtung vermindernde Ausnehmung aufweisen, in die bei fortschreitender Korrosion der Wannensteine feuerfeste Nachrüst-Elemente einsetzbar sind, **dadurch gekennzeichnet,** daß die Ausnehmung am oberen Ende von Palisadensteinen (28, 54, 57) angeordnet und stufenförmig mit mindestens zwei Stufen (33, 34) ausgebildet ist, durch die der Querschnitt der Palisadensteine von unten nach oben sprunghaft verringert ist, daß für jede Stufe (33, 34) zum zugehörigen Ausnehmungsteil (31, 32; 31a, 32a) komplementäre Nachrüst-Elemente (42, 44) vorhanden sind, die nacheinander in denjeweiligen Ausnehmungsteil einsetzbar sind, und daß die Nachrüst-Elemente aus einem zu den Palisadensteinen kompatiblen, gegenüber Glas weitgehend resistenten Werkstoff besteht.

2. Schmelzwanne nach Anspruch 1, **dadurch gekennzeichnet**, daß die Ausnehmungsteile (31, 32; 31a, 32a) von Seitenwänden (50, 51; 50a, 51a) begrenzt sind, deren Anßenflächen (52, 53) mit den Anßenflächen im Bereich des unteren Querschnitts des Palisadensteins (28, 54, 57) fluchten.

3. Schmelzwanne nach Anspruch 2, **dadurch gekennzeichnet**, daß die Ausnehmungsteile (31a, 32a) mindestens einen konkaven, vorzugsweise trapezförmigen Querschnitt besitzen.

4. Schmelzwanne nach Anspruch 2, **dadurch gekennzeichnet**, daß die Ausnehmungsteile (31, 32) mindestens einen rechteckigen Querschnitt besitzen.

5. Schmelzwanne nach Anspruch 1, **dadurch gekennzeichnet**, daß die Ausnehmungsteile (31b, 32b) über die gesamte Breite des Palisadensteins (57) durchgehend ausgebildet sind.

6. Schmelzwanne nach Anspruch 1, **dadurch gekennzeichnet**, daß die Kühlluftdüsen (15) in der ersten Betriebsphase der Palisadensteine (28, 54, 57) auf den zur Innenseite (29) parallelen Grund (58) des tiefsten Ausnehmungsteils (31, 31a, 31b) gerichtet sind und daß jedes weniger tiefe Ausnehmungsteil (32, 32a, 32b) durch ein wärmedämmendes Füllstück (35) ausgefüllt ist.

7. Schmelzwanne nach Anspruch 1, **dadurch gekennzeichnet**, daß beim Vorhandensein eines ersten Nachrüst-Elements (42) im tiefsten Ausnehmungsteil (31, 31a, 31b) die Kühlluftdüsen (15) auf dieses erste Nachrüst-Element (42) gerichtet sind.

8. Schmelzwanne nach Anspruch 7, **dadurch gekennzeichnet**, daß beim Vorhandensein eines zweiten Nachrüst-Elements (44) im zweit-tiefsten Ausnehmungsteil (32, 32a, 32b) die Kühlluftdüsen (15) auf dieses zweite Nachrüst-Element (44) gerichtet sind.

9. Schmelzwanne nach Anspruch 1, **dadurch gekennzeichnet**, daß beim Vorhandensein von unteren Wärmedämmplatten (11, 12), die die Palisadensteine (28, 54, 57) unterhalb der Ausnehmungsteile (31, 32; 31a, 32a; 31b, 32b) auf ihrer Außenseite (30) umgeben, auf diesen unteren Wärmedämmplatten obere Wärmedämmplatten (36, 37) aufsitzen, die unmittelbar unterhalb der Kühlluftdüsen (15) enden und die am weitesten nach unten reichenden Ausnehmungsteile (32, 32a, 32b) auf mindestens einem Teil ihrer Höhe überdecken.

10. Schmelzwanne nach Anspruch 9, **dadurch gekennzeichnet**, daß zum Zeitpunkt des Angriffs der Glasschmelze auf das jeweils zweite Nachrüst-Element (44) die unmittelbar angrenzenden oberen Wärmedämmplatten (36) durch je ein drittes Nachrüst-Element (46) aus einem gleichfalls gegenüber der Glasschmelze weitgehend resistenten Werkstoff ersetzt sind, auf deren oberes Ende die Kühlluftdüse (15) gerichtet ist.

11. Schmelzwanne nach Anspruch 9, **dadurch gekennzeichnet**, daß zum Zeitpunkt des Angriffs der Glasschmelze auf das jeweils dritte Nachrüst-Element (46) die unmittelbar angrenzenden oberen Wärmedämmplatten (37) durch je ein viertes Nachrüst-Element (48) aus einem gegenüber der Glasschmelze weitgehend resistenten Werkstoff ersetzt sind, auf deren oberes Ende die Kühlluftdüse (15) gerichtet ist.

12. Schmelzwanne nach Anspruch 1, **dadurch gekennzeichnet**, daß - in Erosionsrichtung gesehen - die Wandstärke (s) des Palisadensteins (28, 54, 57) im Bereich des ersten Ausnehmungsteils (31, 31a, 31b) zwischen 50 und 150 mm, vorzugsweise zwischen 80 und 120 mm, liegt und daß die Dicke (d) eines jeden Nachrüst-Elements (42, 44, 46, 48) zwischen 50 und 100 mm, vorzugsweise zwischen 65 und 85 mm, liegt.

13. Schmelzwanne nach Anspruch 1, **dadurch gekennzeichnet**, daß die Höhe h₁ des ersten Nachrüst-Elements (42) zwischen 100 und 500, vorzugsweise zwischen 120 und 300 mm, beträgt, daß die Höhe h₂ des zweiten Nachrüst-Elements (44) zwischen 200 und 600 mm, vorzugsweise zwischen 300 und 500 mm, beträgt, in jedem Falle aber größer ist als die Höhe h₁ des ersten Nachrüst-Elements (42), und daß die Höhe des dritten und jedes weiteren Nachrüst-Elements (46, 48) mindestens 400 mm beträgt, in jedem Falle aber größer ist als die Höhe h₂ des zweiten Nachrüst-Elements (44).

14. Betriebsverfahren für eine Schmelzwanne (27) nach den Ansprüchen 1 und 9, mit einem Wannenhohlraum (5) für die Aufnahme einer Glasschmelze und mit aneinandergereihten Wannensteinen, die aus einem feuerfesten, mineralischen Werkstoff bestehen, den Wannenhohlraum umgeben, je eine dem Wannenhohlraum zugekehrte Innenseite (29), eine dem Wannenhohlraum abgekehrte Außenseite (30) und mindestens in ihrem unteren Bereich einen rechteckigen Querschnitt aufweisen und über die vorgegebene Spiegellinie (6) der Glasschmelze nach oben ragen, sowie mit Kühlluftdüsen (15), die aus die Anßenseiten der Wannensteine gerichtet sind, wobei die Wannensteine (28, 54, 57) auf ihrer Außenseite (30) eine den Querschnitt in Tiefenrichtung vermindernde Ausnehmung aufweisen, in die bei fortschreitender Korrosion der Wannensteine feuerfeste Nachrüst-Elemente einsetzbar sind,
**dadurch gekennzeichnet**, daß die Schmelzwanne (27) in einer ersten von mehreren Betriebsphasen ohne ein Nachrüstelement (42) im ersten Ansnehmungsteil (31, 31a, 31b) und mit Kühlluftbespülung des Grundes (58) dieses Ausnehmungsteils betrieben wird, und daß in der mindestens einen nachfolgenden Betriebsphase jeweils ein weiteres Nachrüstelement (42, 44, 46, 48) in das erste (31, 31a, 31b) und jedes weitere Ausnehmungsteil (32, 32a, 32b) eingesetzt wird, und daß jeweils die Außenseite des einzeln nachgesetzten Nachrüstelements mit Kühlluft angeblasen wird.

15. Betriebsverfahren nach Anspruch 14, **dadurch gekennzeichnet**, daß
a) sich in der ersten Phase im zweiten Ausnehmungsteil (32, 32a, 32b) und oberhalb der unteren Wärmedämmplatten (11, 12) je eine weitere Wärmedämmplatte (35) befindet, deren Oberkante unterhalb der Kühlluftdüse (15) liegt, und daß die Schmelzwanne (27)
b) in der zweiten Phase mit dem ersten Nachrüst-Element (42) im ersten Ausnehmungsteil (31, 31a, 31b) und mit Kühlluftbespülung dieses Nachrüst-Elements (42) betrieben wird, wobei sich im zweiten Ausnehmungsteil (32, 32a, 32b) und oberhalb der unteren Wärmedämmplatten (11, 12) je eine weitere Wärmedämmplatte (35) befindet, deren oberkante unterhalb der Kühlluftdüse (15 liegt,
c) in einer dritten Phase mit einem zweiten Nachrüst-Element (44) im Ausnehmungsteil (32, 32a, 32b) und mit Kühlluftbespülung dieses Nachrüst-Elements betrieben wird, wobei sich oberhalb der unteren Wärmedämmplatten (11, 12) weitere Wärmedämmplatten (36, 37) befinden, deren Oberkanten unterhalb der Kühlluftdüse (15) liegen,
d) in einer vierten Phase mit einem dritten Nachrüst-Element (46) oberhalb der unteren Wärmedämmplatten (11, 12) und mit Kühlluftbespülung dieses Nachrüst-Elements (46) betrieben wird, wobei sich oberhalb der unteren Wärmedämmplatten (11, 12) eine weitere Wärmedämmplatte (37) befindet, deren Oberkante unterhalb der Kühlluftdüse (15) liegt, und daß die Schmelzwanne (27)
e) in einer fünften Phase mit einem vierten Nachrüst-Element (48) oberhalb der unteren Wärmedämmplatten (11, 12) und mit Kühlluftbespülung dieses Nachrüst-Elements (48) betrieben wird.

16. Betriebsverfahren nach Anspruch 14, dadurch gekennzeichnet, daß der Nachrüstzeitpunkt für den Einsatz eines jeden folgenden Nachrüst-Elements (42, 44, 46, 48) durch Erfassung der Temperatur der jeweils angeblasenen Oberfläche bestimmt wird.

## Claims

1. A melting end (27) for glass-melting furnaces with an end chamber (5) for accommodating molten glass and with a row of end stones, which are made of a fireproof mineral material and which surround the end chamber, comprising a respective inner side (29) facing towards the end chamber, an outer side (30) facing away from the end chamber, and at least in its lower region a rectangular cross-section, and projecting upwardly over a specified mirror surface (6) of the molten glass, and with cooling-air nozzles (15) which are oriented towards the outer sides of the end stones, and that the end stones (28, 54, 57) have on their outside (30) a recess which reduces the cross-section in its depth direction and into which fireproof supplementary elements are inserted with progressive corrosion of the end stones, **characterised in that** the recess is arranged at the top end of soldier blocks (28, 54, 57) and arranged in the form of steps with at least two steps (33, 34), by which the cross-section of the soldier blocks is discontinuously reduced from the bottom to the top, that complementing supplementary elements are available for each step (33, 34) of an associated recess portion (31, 32; 31a, 32a), which are inserted one after the other into a respective portion of the recess, and that the supplementary elements are made of a material which is compatible with the soldier blocks and substantially resistant to glass.

2. A melting end according to claim 1, **characterised in that** the recess portions (31, 32; 31a, 32a) are defined by lateral walls (50, 51; 50a, 51a), the outer surfaces (52, 53) of which are flush with the outside surfaces in the area of the lower cross-section of the solder block (28, 54, 57).

3. A melting end according to claim 2, **characterised in that** the recess portions (31, 32a) have an at least concave, preferably trapezoidal cross-section.

4. A melting end according to claim 2, **characterised in that** the recess portions (31, 32) have an at least rectangular cross-section.

5. A melting end according to claim 1, **characterised in that** the recess portions (31b, 32b) are continuous over the entire width of the soldier block (57).

6. A melting end according to claim 1, **characterised in that** the cooling-air nozzles (15) are in the first operational phase of the soldier blocks (28, 54, 57) oriented towards the ground (58), which is parallel with the inner side (29), of the lowest recess portion (31, 31a, 31b), and that each recess portion (32, 32a, 32b) of lesser depth is filled by a thermally resistant filler element (35).

7. A melting end according to claim 1, **characterised in that**, in the presence of a first supplementary element (42) in the lowest recess portion (31, 31a, 31b), the cooling-air nozzles (15) are oriented towards this first supplementary element (42).

8. A melting end according to claim 7, **characterised in that**, in the presence of a second supplementary element (44) in the second deepest recess portion (32, 32a, 32b), the cooling-air nozzles (15) are oriented towards this second supplementary element (44).

9. A melting end according to claim 1, **characterised in that**, in the presence of lower thermally resistant plates (11, 12) which surround the soldier blocks (28, 54, 57) below the recess portions (31, 32; 31a, 32a; 31b, 32b) on their outside (30), these lower thermally resistant plates have on top of them upper thermally resistant plates (36, 37) which terminate directly below the cooling-air nozzles (15) and which cover those recess portions (32, 32a, 32b) which extend furthest downwards at least over part of their height.

10. A melting end according to claim 9, **characterised in that**, at the time the molten glass engages a respective second supplementary element (44), directly adjacent upper thermally resistant plates (36) are replaced by a respective third supplementary element (46) of a material which is also substantially resistant to molten glass, and the cooling-air nozzle (15) is oriented towards the upper end of the latter.

11. A melting end according to claim 9, **characterised in that**, at the time the molten glass engages a respective third supplementary element (46), directly adjacent upper thermally resistant plates (37) are replaced by a respective fourth supplementary element (48) of a material which is substantially resistant to molten glass, and the cooling-air nozzle (15) is oriented towards the upper end of the latter.

12. A melting end according to claim 1, **characterised in that**, as seen in the direction of erosion, the wall thickness (s) of the soldier block (28, 54, 57) in the area of the first recess portion (31, 31a, 31b) is between 50 and 150 mm, preferably between 80 and 120 mm, and the thickness (d) of each supplementary element (42, 44, 46, 48) is between 50 and 100 mm, preferably between 65 and 85 mm.

13. A melting end according to claim 1, **characterised in that** that the height h₁ of the first supplementary element (42) is between 100 and 500, preferably between 120 and 300 mm, that the height h₂ of the second supplementary element (44) is between 200 and 600 mm, preferably between 300 and 500 mm, however, in any case more than the height hi of the first supplementary element (42), and that the height of the third and each subsequent supplementary element (46, 48) is at least 400 mm, in any case more than the height h₂ of the second supplementary element (44).

14. An operating process for a melting end (27) according to claims 1 and 9, with an end chamber (5) for accommodating molten glass and with a row of end stones, which are made of a fireproof mineral material and which surround the end chamber, comprising a respective inner side (29) facing towards the end chamber, an outer side (30) facing away from the end chamber, and at least in its lower region a rectangular cross-section, and projecting upwardly over a specified mirror surface (6) of the molten glass, and with cooling-air nozzles (15) which are oriented towards the outer sides of the end stones, and that the end stones (28, 54, 57) have on their outside (30) a recess which reduces the cross-section in its depth direction and into which fireproof supplementary elements are inserted with progressive corrosion of the end stones, **characterised in that** the melting end (27) is operated in a first of a plurality of operating phases without a supplementary element (42) in a first recess portion (31, 31a, 31b) and with cooling-air rinsing of the bottom (58) of this recess portion, and that in the at least one subsequent operating phase a respective additional supplementary element (42, 44, 46, 48) is inserted into the first (31, 31a, 31b) and each further recess portion (32, 32a, 32b), and that cooling air is blown at the outside of an individually added supplementary element.

15. An operating process according to claim 14, **characterised in that**
a) in the first phase, a respective additional thermally resistant plate (35) is placed in the second recess portion (32, 32a, 32b) and above the lower thermally resistant plates (11, 12), the top edge of which is positioned below the cooling-air nozzle (15); and that
b) in the second phase, the melting end (27) is operated with the first supplementary element (42) in the first recess portion (31, 31a, 31b) and with cooling-air rinsing of this supplementary element (42), and that a respective additional thermally resistant plate (35) is positioned in the second recess portion (32, 32a, 32b) and above the lower thermally resistant plates (11, 12), the top edge of which is below the cooling-air nozzle (15),
c) in a third phase, operation is carried out with a second supplementary element (44) in the recess portion (32, 32a, 32b) and with cooling-air rinsing of this supplementary element, and that additional thermally resistant plates (36, 37) are positioned above the lower thermally resistant plates (11, 12), the top edges of which are below the cooling-air nozzle (15);
d) in a fourth phase, operation is carried out with a third supplementary element (46) above the lower thermally resistant plates (11, 12) and with cooling-air rinsing of this supplementary element (46), and that above the lower thermally resistant plates (11, 12) is placed an additional thermally resistant plate (37), the top edge of which is below the cooling-air nozzle (15); and
e) in a fifth phase, the melting end (27) is operated with a fourth supplementary element (48) above the lower thermally resistant plates (11, 12) and with cooling-air rinsing of this supplementary element (48).

16. An operating process according to claim 14, **characterised in that** the supplementation time for the use of each successive supplementary element (42, 44, 46, 48) is determined by determining the temperature of a respectively blown at surface.

## Revendications

1. Cuve de fusion (27) pour des fours à cuve de verrerie, comprenant une cavité de cuve (5) pour recevoir une fonte de verte, et comprenant des blocs de cuve en rangée les uns contre les autres, qui'sont réalisés en une matière réfractaire minérale, qui entourent la cavité de cuve et qui présentent chacun une face intérieure (29) orientée vers la cavité de cuve, une face extérieure (30) détournée de la cavité de cuve et ont au moins dans leur région inférieure une section rectangulaire, et qui dépassent vers le haut au-dessus du niveau prédéterminé (6) de la fonte de verte, la cuve comprenant également des buses d'air de refroidissement (15) qui sont dirigées vers les côtés extérieurs des blocs de cuve, les blocs de cuve (28, 54, 57) présentant sur leur face extérieure (30) un évidement qui réduit la section dans la direction de la profondeur, dans lequel on peut mettre en place des éléments de remplacement réfractaires lors d'une progression de la corrosion des blocs de cuve, caractérisée en ce que l'évidement est agencé à l'extrémité supérieure de blocs en palissade (28, 54, 57) et est réalisé en gradin avec au moins deux gradins (33, 34) à cause desquels la section des blocs en palissade se réduit par sauts du bas vers le haut, en ce qu'il est prévu pour chaque gradin (33, 34) des éléments de remplacement (42, 43) complémentaires de la partie associée d'évidement (31, 32 ; 31a, 32a), lesdits éléments de remplacement pouvant être mis en place les uns après les autres dans la partie d'évidement respective, et en ce que les éléments de remplacement sont réalisés en un matériau compatible vis-à-vis des blocs en palissade et largement résistant par rapport au verte.

2. Cuve de fusion selon la revendication 1, caractérisée en ce que les parties d'évidement (31, 32 ; 31a, 32a) sont limitées par des parois latérales (50, 51 ; 50a, 51a) dont les surfaces extérieures (52, 53) sont en affleurement avec les faces extérieures dans la région de la section inférieure du bloc en palissade (28, 54, 57).

3. Cuve de fusion selon la revendication 2, caractérisée en ce que les parties d'évidement (31a, 32a) possèdent au moins une section concave, de préférence de forme trapézoïdale.

4. Cuve de fusion selon la revendication 2, caractérisée en ce que les parties d'évidement (31, 32) possèdent une section rectangulaire.

5. Cuve de fusion selon la revendication 1, caractérisée en ce que les parties d'évidement (31b, 32b) sont réalisées en continu sur la totalité de la largeur du bloc en palissade (57).

6. Cuve de fusion selon la revendication 1, caractérisée en ce que les buses d'air de refroidissement (15) sont dirigées pendant la première phase de fonctionnement des blocs en palissade (28, 54, 57) vers le fond (58) de la partie d'évidement la plus profonde (31, 31a, 31b), parallèle à la face intérieure (29), et en ce que chaque partie d'évidement moins profonde (32, 32a, 32b) est remplie par un élément de remplissage (35) qui assure une isolation thermique.

7. Cuve de fusion selon la revendication 1, caractérisée en ce qu'en présence d'un premier élément de remplacement (42) dans la partie d'évidement la plus profonde (31, 31a, 31b) les buses d'air de refroidissement (15) sont dirigées vers ce premier élément de remplacement (42).

8. Cuve de fusion selon la revendication 7, caractérisée en ce qu'en présence d'un second élément de remplacement (44) dans l'avant-dernière partie d'évidement en profondeur (32, 32a, 32b) les buses d'air de refroidissement (15) sont dirigées vers ce second élément de remplacement (44).

9. Cuve de fusion selon la revendication 1, caractérisée en ce qu'en présence de plaques thermiquement isolantes inférieures (11, 12) qui entourent les blocs en palissade (28, 54, 57) au-dessous des parties d'évidement (31, 32 ; 31a, 32a ; 31b, 32b) sur leur face extérieure (30) des plaques thermiquement isolantes supérieures (36, 37) reposent sur ces plaques thermiquement isolantes inférieures, lesdites plaques supérieures se terminant directement au-dessous des buses d'air de refroidissement (15) et recouvrant sur au moins une partie de leur hauteur les parties d'évidement (32, 32a, 32b) qui s'étendent le plus loin vers le bas.

10. Cuve de fusion selon la revendication 9, caractérisée en ce qu'au moment du contact de la fonte de verte sur le second élément de remplacement respectif (44) les plaques thermiquement isolantes supérieures (36) immédiatement adjacentes sont remplacées chacune par un troisième élément de remplacement (46) en un matériau également largement résistant par rapport à la fonte de verte, les buses d'air de refroidissement (15) étant dirigées vers l'extrémité supérieure du troisième élément de remplacement.

11. Cuve de fusion selon la revendication 9, caractérisée en ce qu'au moment du contact de la fonte de verte sur le troisième élément de remplacement respectif (46), les plaques thermiquement isolantes supérieures (37) immédiatement adjacentes sont remplacées chacune par un quatrième élément de remplacement (48) en un matériau largement résistant par rapport à la fonte de verte, les buses d'air de refroidissement (15) étant dirigées vers l'extrémité supérieure dudit quatrième élément de remplacement.

12. Cuve de fusion selon la revendication 1, caractérisée en ce que l'épaisseur (s) de paroi - vue dans la direction d'érosion - du bloc en palissade (28, 54, 57) dans la région de la première partie d'évidement (31, 31a, 31b) est située entre 50 et 150 mm, de préférence entre 80 et 120 mm, et en ce que l'épaisseur (d) de chaque élément de remplacement (42, 44, 46, 48) est compris entre 50 et 100 mm, de préférence entre 65 et 85 mm.

13. Cuve de fusion selon la revendication 1, caractérisée en ce que la hauteur h1 du premier élément de remplacement (42) est comprise entre 100 et 500, de préférence entre 120 et 300 mm, en ce que la hauteur h₂ du second élément de remplacement (44) est comprise entre 200 et 600 mm, de préférence entre 300 et 500 mm, en étant en tout cas supérieure à la hauteur h₁ du premier élément de remplacement (42), et en ce que la hauteur du troisième élément de remplacement et de chaque élément de remplacement suivant (46, 48) est au moins égale à 400 mm, en tout cas supérieur à la hauteur h₂ du second élément de remplacement (44).

14. Procédé de fonctionnement pour une cuve de fusion (27) selon les revendications 1 et 9, comprenant une cavité de cuve (5) pour recevoir une fonte de verte, et comprenant des blocs de cuve en rangée les uns contre les autres, réalisés en un matériau réfractaire minéral, lesdits blocs de cuve entourant la cavité de cuve, présentant chacun une face intérieure (29) dirigée vers la cavité de cuve, une face extérieure (30) détournée de la cavité de cuve et une section rectangulaire, au moins dans leur région inférieure, et lesdits blocs de cuve dépassant vers le haut au-dessus du niveau prédéterminé (6) de la fonte de verte, la cuve de fusion comprenant également des buses d'air de refroidissement (15) qui sont dirigées vers les faces extérieures des blocs de cuve, les blocs (28, 54, 57) présentant sur leur face extérieure (30) un évidement qui réduit la section en direction de la profondeur, dans lequel on peut mettre en place des éléments de remplacement réfractaires lors de la progression de l'érosion des blocs de cuve, caractérisé en ce que la cuve de fusion (27) est utilisée au cours d'une première phase de fonctionnement, parmi plusieurs phases de fonctionnement, sans élément de remplacement (42) dans la première partie d'évidement (31, 31a, 31b) et en soufflant de l'air de refroidissement sur le fond (58) de cette partie d'évidement, et en ce qu'au moins dans l'une des phases de fonctionnement suivante on met en place un autre élément de remplacement respectif (42, 44, 46, 48) dans la première partie d'évidement (31, 31a, 31b) et dans chaque autre partie d'évidement (32, 32a, 32b), et en ce qu'on souffle de l'air de refroidissement sur la face extérieure respective des éléments de remplacement mis en place individuellement.

15. Procédé de fonctionnement selon la revendication 14, caractérisé en ce que :
a) une plaque thermiquement isolante (35) supplémentaire dont l'arête supérieure est située au-dessous de la buse d'air de refroidissement (15), est située dans la première phase dans la seconde partie d'évidement (32, 32a, 32b) et au-dessus des plaques thermiquement isolantes inférieures (11, 12),
et en ce que la cuve de fusion (27)
b) est utilisée dans la seconde phase avec le premier élément de remplacement (42) dans la première partie d'évidement (31, 31a, 31b) et soufflant de l'air de refroidissement sur cet élément de remplacement (42), une autre plaque thermiquement isolante (35), dont l'arête supérieure est située au-dessous de la buse d'air de refroidissement (15), étant située dans la seconde partie d'évidement (32, 32a, 32b) et au-dessus des plaques thermiquement isolantes inférieures (11, 12),
c) est utilisée dans une troisième phase avec un second élément de remplacement (44) dans la partie d'évidement (32, 32a, 32b) et en soufflant de l'air de refroidissement sur cet élément de remplacement, d'autres plaques thermiquement isolantes (36, 37), dont les arêtes supérieures sont situées au-dessous des buses d'air de refroidissement (15), étant situées au-dessus des plaques thermiquement isolantes inférieures (11, 12),
d) est utilisée dans une quatrième phase avec un troisième élément de remplacement (46) au-dessus des places d'isolation thermique inférieures (11, 12) et en soufflant de l'air de refroidissement sur cet élément de remplacement (46), une autre plaque thermiquement isolante (37), dont l'arête supérieure est située au-dessous des buses d'air de refroidissement (15) étant située au-dessus des plaques thermiquement isolantes inférieures (11, 12),
et en ce que la cuve de fusion (27)
e) est utilisée dans une cinquième phase avec un quatrième élément de remplacement (48) au-dessus des plaques thermiquement isolantes inférieures (11, 12) et en soufflant de l'air de refroidissement sur cet élément de remplacement (48).

16. Procédé de fonctionnement selon la revendication 14, caractérisé en ce que l'instant de remplacement pour la mise en place de chaque élément de remplacement suivant (42, 44, 46, 48) est déterminé en détectant la température de la surface respective sur laquelle l'air de refroidissement est soufflé.
